# EUROPEAN PATENT APPLICATION

(11) **EP 1 209 346 A2**
(43) Date of publication of application: **29.05.2002**
(21) Application number: 01127626.8
(22) Date of filing: 20.11.2001
(51) Int. Cl.: F02M 31/125

(54) **Device designed to improve combustion efficiency in internal combustion engines**

(30) Priority: 27.11.2000 IT PC000037
(71) Applicant: Pelati Roberto, 29010 Calendasco (PC) (IT); Cremona Giampiero, 29100 Piacenza PC (IT)
(72) Inventor: Pelati Roberto, 29010 Calendasco (PC) (IT); Cremona Giampiero, 29100 Piacenza PC (IT)
(74) Representative: La Ciura, Salvatore

(57) **Abstract**

A device is described, designed to improve combustion efficiency in internal combustion engines, by using means which heat the fuel during its transfer from the fuel tank to the parts that introduce it into the engine.

In particular it is a device comprising induction devices which heat the fuel conveyed to the engine, that consist of a coil powered with electrical current, and that the said coil is wound round a metal pipe through which the fuel to be heated passes.

The positive electrical pole is preferably located on the fuel input side.

This improves the efficiency of the engine, presumably as a result of polarisation phenomena which improve the combustion processes, and moreover a considerable reduction in carbon monoxide emissions was found.

## Description

This invention relates to a device designed to improve combustion efficiency in internal combustion engines, in particular by using means which heat the fuel during its transfer from the fuel tank to the parts that introduce it into the engine.

In other words, this is a device which is used to heat fuel to a predetermined temperature before it feeds the engine, and which at the same time improves the efficiency of combustion due to the effect of the electromagnetic field created by the heating device.

This solution is already known and described in various patents, including utility model patent no. 203,044, which relates to a fuel treatment device designed in particular, though not solely, for diesel engines.

According to the solution described in that patent, the fuel is pre-heated before being sent to the filter, to prevent the paraffin wax contained in the diesel fuel that feeds this type of engine from solidifying, thus clogging the filter and causing the engine to stop.

This type of pre-heating is effected by using a kind of heat exchanger situated upstream of the engine feed parts. The said heat exchanger is designed to remove heat from the coolant and yield it to the fuel, which is thus maintained at a sufficiently high temperature.

According to the solution described in the above-mentioned patent, which represents the state of the art, the coil that conveys the coolant is located in a sleeve through which the fuel to be heated flows.

This solution presents two major drawbacks:
**1.** the first is a certain difficulty of manufacture and limited safety of the heating coil contained in the sleeve, as the coil must be fitted along the inner perimeter of the sleeve in such a way that the ends project from the wall and are coupled to the fuel pipe
**2.** the second is that the heating coil cannot dispense heat to the fuel at the starting and immediately subsequent stages because, especially when the vehicle has been stationary for a long time in cold weather, the coolant in the engine cooling circuit is as cold as the fuel, and therefore practically unusable at this stage, which is well known to be the most critical for the vehicle in winter.

The purpose of the innovation is to eliminate the said drawbacks by using a heating device for vehicle fuels, especially diesel but also petrol, gas and the like, which does not use the engine coolant but an independent heating system, in which the heating means are designed to be fitted outside rather than inside the fuel pipe.

The immediate advantage achieved by the innovation is to eliminate all the manufacturing difficulties involved in installing the coil inside the fuel pipe, because in this case the coil is located outside the pipe.

Another advantage is that as the heating means used are independent of the cooling circuit, the heating value of the heater in question can be exploited right from the first stages of ignition of the vehicle, which are the most critical.

Another advantage of the innovation is that it exploits the magnetic fields generated by the electrical heating current, which have a beneficial influence on the chemico-physical properties of the fuel, further improving the combustion stages and considerably reducing carbon monoxide emissions.

The purposes and advantages described above are all achieved in accordance with the invention by a device designed to improve the combustion efficiency of internal combustion engines, in particular by using means which heat the fuel during its transfer from the fuel tank to the parts that introduce it into the engine, the said device being characterised i) by the presence of a coil constituted by an electrical resistor powered by an independent battery, or preferably by the vehicle's electrical power supply system, and ii) by the fact that the said coil is wound round the fuel pipe to be heated.

Further characteristics and details of the innovation will appear more clearly from the description set out below, given by way of example but not of limitation, and from the annexed drawing, which shows a schematic view of the device to which the innovation relates, in cross-section.

In the annexed figure, no. 1 indicates a device in accordance with the innovation which is designed to improve the combustion efficiency of internal combustion engines, in particular by using means which heat the fuel during its transfer from the fuel tank to the parts that introduce it into the engine.

Device 1 consists of a cylindrical casing or container 2, enclosing a pipe 3 made of non-magnetic material, in particular copper, the said pipe being inserted into the vehicle fuel supply system between two lengths 4 and 5 of the fuel pipe.

The characteristic feature of the invention is the presence of a coil 6 wound round pipe 3, which said coil is powered by direct current between a positive pole 7 and a negative pole 8 and, by induction, heats copper pipe 3, which in turn transmits heat to the fuel.

Coil 6 may be powered by an independent battery or by the electrical power supply system of the vehicle in which the device is installed.

Coil 6, which is wound round pipe 3 in a series of loops that totally enclose it, is embedded in a layer of filling material, such as resin-based material, contained in cylindrical container 2.

The device is also equipped with a control instrument constituted by a lamination 9 in contact with pipe 3, which said lamination is connected to one or more temperature sensors 10 designed to cut off the electricity supply when the temperature of pipe 3 reaches the pre-set value.

Coil 6 not only heats the fuel flow by induction, but also creates a magnetic field around pipe 3.

During the tests conducted, it was unexpectedly discovered that this improves the efficiency of the engine, presumably as a result of polarisation phenomena which improve the combustion processes.

A considerable reduction in carbon monoxide emissions was also found.

The tests demonstrated that this latter effect is magnified when the positive pole of the power supply of coil 6 is located on the fuel input side. If the polarity of the coil is reversed, the carbon monoxide emissions are not reduced, although there is a certain overall improvement in the efficiency of the engine, because the heating of the fuel produces the optimum fluidity.

The dimensions and materials and the arrangement of the device and the coil on pipe 3 could obviously be modified, but the resulting solutions must still be deemed to fall within the ambit of this invention, which is defined by the following claims.

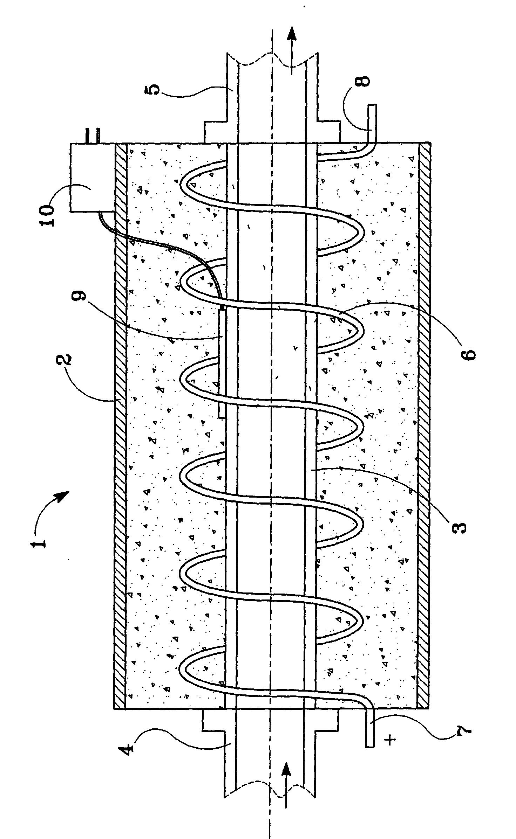

## Claims

1. Device designed to improve combustion efficiency in internal combustion engines, in particular by heating the fuel during its transfer from the fuel tank to the parts which introduce it into the engine, **characterised in that** the said device includes induction devices which heat the fuel conveyed to the engine.

2. Device designed to improve combustion efficiency in internal combustion engines as claimed in claim 1, **characterised in that** the said devices consist of a coil powered with electrical current, and that the said coil is wound round a metal pipe through which the fuel to be heated passes.

3. Device designed to improve combustion efficiency in internal combustion engines as claimed in the preceding claim, **characterised in that** the positive electrical pole is located on the fuel input side.

4. Device designed to improve combustion efficiency in internal combustion engines as claimed in claim 1 or 2, **characterised in that** the said metal pipe is made of non-magnetic material.

5. Device designed to improve combustion efficiency in internal combustion engines as claimed in claim 4, **characterised in that** the said metal pipe is made of copper.

6. Device designed to improve combustion efficiency in internal combustion engines as claimed in each of the preceding claims, **characterised in that** it comprises an external casing or container which contains a metal pipe that is coupled to the vehicle's fuel supply pipe, the said coil being situated between the said outer casing and the said metal pipe.

7. Device designed to improve combustion efficiency in internal combustion engines as claimed in each of the preceding claims, **characterised in that** the said coil wound round the metal pipe is embedded in a layer of resin.

8. Device designed to improve combustion efficiency in internal combustion engines as claimed in each of the preceding claims, **characterised by** the presence of control means constituted by a lamination in contact with the metal pipe, which said lamination is connected to one or more temperature sensors designed to cut off the power to the coil when the temperature reaches the pre-set value.

9. Device designed to improve combustion efficiency in internal combustion engines, as described and illustrated.
